**Europäisches Patentamt**

**European Patent Office**

**Office européen des brevets**

(19)

(11) Veröffentlichungsnummer : **0 341 437 B1**

# (12) EUROPÄISCHE PATENTSCHRIFT

(45) Veröffentlichungstag der Patentschrift :
**05.08.92 Patentblatt 92/32**

(51) Int. Cl.$^5$ : **B60J 1/02,** B32B 17/10,
C03C 27/12, B29C 73/02

(21) Anmeldenummer : **89106431.3**

(22) Anmeldetag : **11.04.89**

(54) Vorrichtung zum Ausbessern von Steinschlagschäden an Windschutzscheiben.

(30) Priorität : **11.05.88 DE 8806284 U**

(43) Veröffentlichungstag der Anmeldung :
**15.11.89 Patentblatt 89/46**

(45) Bekanntmachung des Hinweises auf die
Patenterteilung :
**05.08.92 Patentblatt 92/32**

(84) Benannte Vertragsstaaten :
**AT CH DE ES FR GB IT LI NL SE**

(56) Entgegenhaltungen :
**WO-A-89/09070
DE-A- 563 722
DE-C- 426 587
FR-A- 2 609 624
GB-A- 5 440
US-A- 1 863 785
US-A- 3 669 111
US-A- 4 419 305**

(73) Patentinhaber : **THERA Patent GmbH & Co. KG
Gesellschaft für industrielle Schutzrechte
Griesberg 2
W-8031 Seefeld 1 (DE)**

(72) Erfinder : **Herold, Wolf-Dietrich
Hoehenweg 13
W-8031 Seefeld 2 (DE)**
Erfinder : **Koran, Peter
Tassiloring 7
W-8120 Weilheim (DE)**

(74) Vertreter : **Strehl, Schübel-Hopf, Groening
Maximilianstrasse 54 Postfach 22 14 55
W-8000 München 22 (DE)**

EP 0 341 437 B1

## Beschreibung

An aus Verbundglas bestehenden Windschutzscheiben von Kraftfahrzeugen können durch Steinschlag kleine Krater von wenigen Millimetern Durchmesser entstehen, wobei sich in der Regel ein kegelartiger Riß von außen nach innen bis zu der zwischen den Verbundglasscheiben vorgesehenen Folie bildet.

Es ist bekannt, derartige Schäden durch Einpressen eines dünnflüssigen Klebstoffs auszubessern, wobei sich als Klebstoff insbesondere ein lichthärtendes Kunstharz eignet, das im ausgehärteten Zustand klar ist und einen ähnlichen Brechungsindex hat wie das zu reparierende Glas. Der Klebstoff hat dabei zwei Aufgaben, nämlich zum einen die mechanische Stabilität des Glases wieder herzustellen und zum anderen durch Auffüllen von Luftspalten zwischen den Bruchflächen störende Lichtbrechungen zu beseitigen.

Aus US-A-3,765,975 ist eine Vorrichtung zur Durchführung solcher Reparaturen bekannt, wobei auf die Windschutzscheibe ein Block mit einem die Schadstelle umgebenden und gegenüber der Scheibe abgedichteten Hohlraum aufgesetzt, in diesen Hohlraum das flüssige Kunstharz eingefüllt und sodann mit Hilfe einer Injektionsspritze abwechselnd Unter- und Überdruck erzeugt wird, um die genannten Luftspalte zu evakuieren und das Kunstharz in diese einzupressen. Der in dem Block vorgesehene Hohlraum ist dabei gegenüber der Windschutzscheibe durch einen O-Ring abgedichtet. Um die Vorrichtung an ihrer Stelle zu halten, muß jedoch auf den Block und damit auf die Windschutzscheibe in der Umgebung der Schadstelle Druck ausgeübt werden, wobei die Gefahr besteht, daß die Schadstelle durch diesen Druck vergrößert und möglicherweise irreparabel wird. Die gleiche Gefahr besteht dann, wenn durch wiederholte Pumpvorgänge mittels der Injektionsspritze versehentlich ein zu hoher Druck im Bereich der Schadstelle aufgebaut wird. Ebenso besteht die Gefahr, daß Klebstoff zwischen Folie und Glas eingepreßt wird. Ein weiterer Nachteil besteht darin, daß in den genannten Hohlraum mehr Kunstharz eingefüllt wird, als zum Auffüllen der Risse in der Scheibe an sich erforderlich ist, so daß die eingefüllte Kunstharzmenge nach beendeter Reparatur einen bleibenden Spannungszustand in der Schadstelle hervorruft, der zu Folgeschäden führen kann.

Aus DE-C-3 607 738 ist eine weitere Vorrichtung bekannt, bei der der Unterdruck durch einen auf die Schadstelle aufgesetzten weichelastischen Saugnapf erzeugt und das flüssige Kunstharz mittels einer Injektionsspritze der Schadstelle zugeführt wird. Dabei wird der aus durchsichtigem Material bestehende Saugnapf mit der Nadel der Injektionsspritze durchstochen. Damit der Saugnapf einen Unterdruck erzeugen kann, muß er zunächst unter entsprechendem Druck auf die Windschutzscheibe im Bereich der Schadstelle aufgesetzt werden. Wiederum besteht die Gefahr, daß durch diesen manuell erzeugten Druck der an sich schon empfindliche Bereich in der Umgebung der Schadstelle übermäßig belastet und dadurch der Schaden vergrößert wird. Eine weitere Schwierigkeit besteht darin, daß der Saugnapf, auch wenn er aus durchsichtigem Material besteht, eine Beobachtung der Schadstelle und damit ein genaues Einbringen des Kunstharzes in den Bereich an der Spitze des kegelartigen Risses erschwert. Ferner erfordert das Durchstechen des Saugnapfes mit der Injektionsnadel einiges Geschick, um sicherzustellen, daß die Nadelspitze genau auf die besagte Kegelspitze trifft. Gelingt dies nicht, so wird der Anwender versuchen, die Richtung der Nadel durch Verschwenken der Injektionsspritze zu verändern, was zu Undichtigkeiten am Saugnapf und damit zu einem Verlust des Unterdrucks führen kann. Schließlich besteht die Gefahr, daß beim Durchstechen des Saugnapfes die Injektionsnadel zu weit eingeführt wird und ihrerseits die Schadstelle weiter beschädigt.

Weiterhin ist auf dem amerikanischen Markt eine von der Firma Clear Star Products, Inc. vertriebene Vorrichtung im Handel, bei deren Verwendung zunächst auf die Windschutzscheibe ein kreisringförmiges doppelseitiges Klebeband aufgebracht wird, das ein die Schadstelle freilassendes Loch aufweist. Auf das Klebeband wird ein Sockel aufgeklebt, der mit einem nach außen ragenden, an dem Loch in dem Klebeband endenden röhrchenförmigen Ansatz versehen ist. In diesen Ansatz wird mit einer Pipette das flüssige Kunstharz eingefüllt. Daraufhin wird eine Injektionsspritze eingeführt, deren Gehäuse in der Seitenwand nahe dem unteren Ende eine mit einem Stift verschließbare Ventilöffnung aufweist. Bei eingeführtem Ventilstift wird zunächst der Kolben zurückgezogen, um an der Schadstelle einen Unterdruck zu erzeugen und eingeschlossene Luft zu entfernen. In der herausgezogenen Stellung wird der Kolben durch Einrasten einer Federspange gehalten. Sodann wird der Ventilstift herausgezogen, um die Unterdruckwirkung zu beenden, und anschließend wieder eingeschoben. Dann wird der Kolben nach unten gedrückt, um das Kunstharz durch Überdruck in die Schadstelle einzupressen. In der eingeschobenen Druckstellung wird der Kolben durch eine weitere Rastung festgehalten. Der abwechselnde Unterdruck/Überdruck-Pumpvorgang kann mehrmals wiederholt werden.

Eine ähnliche Handhabung ist bei einer weiteren, aus US-A-4,419,305 bekannten Vorrichtung vorgesehen, die die Merkmale des ersten Teils des Patentanspruchs 1 aufweist. Dieses Gerät wird zunächst ohne seinen in den Zylinder eingeführten Kolben so auf die Windschutzscheibe aufgesetzt, daß eine am vorderen Ende vorhandene O-Ring-Dichtung die Schadstelle umgibt, woraufhin in das der Dichtung benachbarte Zylinderende Kunstharz eingefüllt wird. Dann wird der Kolben so weit eingeschraubt, daß daß eine vordere Dichtung ein die Zylinderwand durchsetzendes Belüftungsloch noch freiläßt. In diesem Zustand wird über eine Schlauchverbindung an eine den Zylinder umgebende Kammer ein Unterdruck angelegt, der etwaige Lufteinschlüsse aus dem Kunstharz entfernen soll. Danach wird der Kolben durch manuelles Drehen an seinem hinteren Griff vorgeschoben, um das entgaste Kunstharz in die Schadstelle einzupressen.

Da bei Anwendung der beiden zuletzt beschrieben Vorrichtungen der Klebstoff aufgrund von Kapillarkräften bereits anfänglich in die Schadstelle eindringt, wird das Entfernen der Luft aus dieser erschwert, da die Kapillarkräfte dem angelegten Unterdruck entgegenwirken. Ferner besteht auch bei diesen Geräten die Gefahr, daß durch das manuelle Einpressen der Kunstharzes ein zu hoher Überdruck aufgebracht wird, der zu einer Vergrößerung der Schadstelle führen kann. Außerdem ist es möglich, daß bei der Manipulation nicht nur der Kolben sondern versehentlich die gesamte Injektionsspritze gegen die Windschutzscheibe bewegt wird, so daß die Schadstelle durch mechanische Einwirkung vergrößert wird. Schließlich ist beim praktischen Einsatz beider Geräte in der Aufeinanderfolge der einzelnen Verfahrensschritte ein vorgegebener Ablauf einzuhalten, und die verschiedenen Bestandteile der jeweiligen Gesamtvorrichtung sind jeweils in der vorgeschriebenen Weise zusammenzufügen und zu betätigen, so daß zur erfolgreichen Reparatur außer manuellem Geschick eine genaue Beachtung der betreffenden Gebrauchsanweisung erforderlich ist.

Der Erfindung liegt die Aufgabe zugrunde, eine Vorrichtung zum Ausbessern von Steinschlagschäden an Windschutzscheiben anzugeben, die ein wirksames Einbringen des Klebstoffs in die Schadstelle gewährleistet, einfach und sicher zu handhaben ist, mechanische Belastungen der Schadstelle vermeidet und in der Herstellung unaufwendig ist.

Die erfindungsgemäße Lösung dieser Aufgabe ist im Patentanspruch 1 angegeben. Die danach gebaute Vorrichtung stellt sicher, daß bei ihrer Handhabung zunächst ein ausreichender Unterdruck vorgegebener Größe erzeugt wird und daß erst dann, wenn dieser aufgebaut ist, der Kunstharz-Klebstoff auf die Schadstelle gelangt, während der Unterdruckphase durch Kapillarkräfte in diese einläuft und erst danach durch den Atmosphärendruck in die Schadstelle eingepreßt wird, ohne daß manuell ein Druck erzeugt werden müßte. Dadurch wird vermieden, daß der Einpreßdruck zu groß wird oder daß durch manuellen Druck auf die Vorrichtung und damit versehentlich auf die Schadstelle selbst diese zusätzlich beschädigt wird.

Die Ausgestaltungen der Erfindung nach den Ansprüchen 2 bis 4 dienen zur weiteren Erhöhung der Narrensicherheit der Vorrichtung insofern, als ein Eindrücken des Kolbens in das Spritzengehäuse hinein verhindert wird. Die Weiterbildung der Erfindung nach Anspruch 5 ist insofern von Vorteil, als die gleiche Injektionsspritze zum Evakuieren der Schadstelle wie auch zum Einbringen des Kunstharzes dient, wobei die Spritze bereits herstellerseitig gefüllt wird und im gebrauchsfertigen Zustand in die Hand des Benutzers gelangt. Die Weiterbildungen der Erfindung nach den Ansprüchen 6 bis 10 beziehen sich auf vorteilhafte Maßnahmen zur Verringerung des Totvolumens zwischen der Ausbringöffnung der Injektionsspritze und der Schadstelle, zur Verhinderung einer vorzeitigen Aushärtung von bei normalem Licht polymerisierendem Kunstharz, sowie zur Erzielung eines dichten Anschlusses der Injektionsspritze an die Schadstelle.

Bevorzugte Ausführungsbeispiele der Erfindung werden nachstehend anhand der Zeichnung näher erläutert. In der Zeichnung zeigt

Fig. 1 eine Seitenansicht einer im Betrieb befindlichen Vorrichtung zum Ausbessern eines Steinschlagschadens an einer im Schnitt teilweise dargestellten Windschutzscheibe,

Fig. 2 einen Teil der Vorrichtung in einer gegenüber Fig. 1 abgewandelten Ausführung, und

Fig. 3 einen Schnitt durch einen Teil der Vorrichtung nach Fig. 1 oder 2.

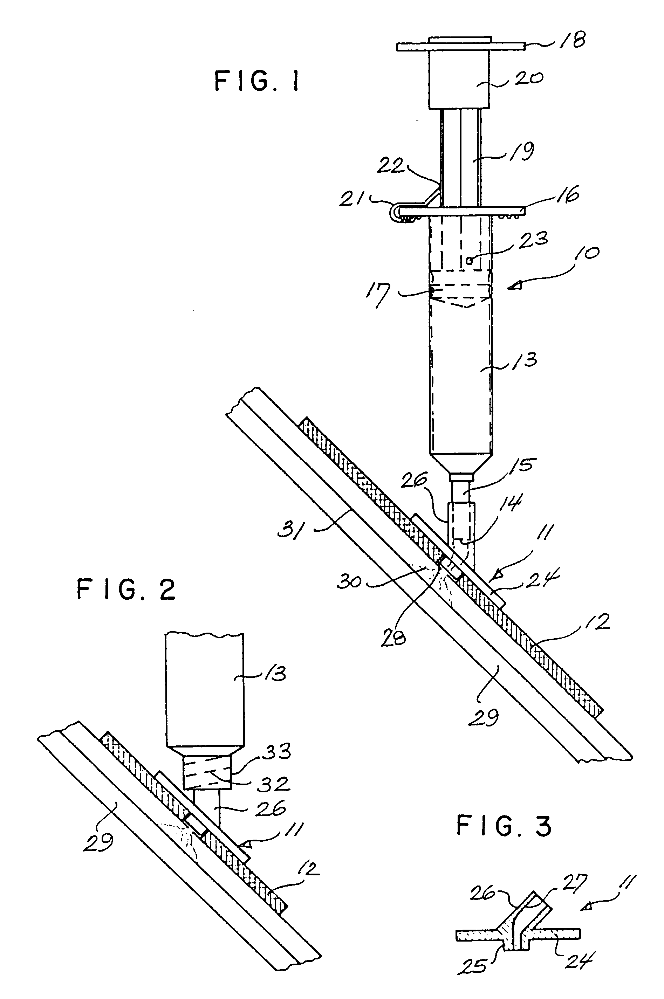

Gemäß Fig. 1 besteht die gesamte Vorrichtung aus drei Teilen, nämlich einer Injektionsspritze 10, einem Applikator 11 und einer Dichtungsscheibe 12.

Die Injektionsspritze 10 umfaßt ein zylindrisches Gehäuse 13 mit einer am vorderen Ende vorgesehenen, in einer Ausbringöffnung 14 endenden Ausbringtülle 15 und einem am hinteren Ende angeformten Flansch 16, sowie einen in dem Gehäuse 13 verschiebbaren und gegenüber dessen Innenwand abgedichteten Kolben 17, der mit einer an ihrem hinteren Ende mit einem Flansch 18 versehenen Kolbenstange 19 verbunden ist. Im Bereich des hinteren Flansches 18 ist die Kolbenstange 19 mit einer Manschette 20 versehen, die ein vollständiges Einschieben der Kolbenstange 19 und damit des Kolbens 17 verhindert. Auf den Flansch 16 des Gehäuses 13 ist eine Raste 21 aufgesteckt, die mit einer nach hinten weisenden Schneide 22 an der Außenfläche bzw. einer der Kanten der gemäß Fig. 1 im Querschnitt sternförmig gestalteten Kolbenstange 19 angreift und ein Vorschieben der Kolbenstange 19 verhindert. Im hinteren (gemäß Fig. 1 oberen) Bereich der Gehäusewandung ist ferner ein Loch 23 an einer Stelle vorgesehen, das sich in der vollständig zurückgezogenen Stellung der Kolbenstange 19 gemäß Fig. 1 unterhalb des Kolbens 17 befindet.

Der Applikator 11 besteht aus einer kreisrunden und im wesentlichen starren Kunststoffscheibe 24 mit einem Durchmesser von vorzugsweise etwa 20 mm, an deren einer Fläche ein zentrischer Stutzen 25 und an deren anderer Seite unter einem Winkel von vorzugsweise etwa 45° ein Ansatz 26 angeformt ist. Wie insbesondere aus Fig. 3 ersichtlich, weist der Applikator 11 eine durch den Ansatz 26 und den Stutzen 25 verlaufende Durchführung 27 auf, die über den wesentlich Teil der Länge des Ansatzes 26 zylindrisch ist und sich zu ihrer am unteren Ende des Stutzens 25 gelegenen Öffnung auf einen verhältnismäßig kleinen Durchmesser verjüngt. Der Außendurchmesser des Stutzens 25 beträgt vorzugsweise etwa 6 mm. Der Innendurchmesser der Durchführung 27 im Bereich des Ansatzes 26 ist so bemessen, daß sich die Ausbringtülle 15 der Injektionsspritze 10 einführen läßt und sich dabei mindestens mit ihrem äußeren Ende an die Innenwand der Durchführung 27 im Bereich der Verjüngung dichtend anlegt.

Die Dichtungsscheibe 12 besteht aus einem beidseitig mit Klebstoff versehenen weichelastischen Kunststoffmaterial mit einem Außendurchmesser von vorzugsweise etwa 50 mm. Die Dichtungsscheibe 12 ist mit einem zentrischen Loch 28 mit einem Durchmesser von vorzugsweise etwa 6 mm versehen. Der Innendurchmesser des Lochs 28 ist geringfügig größer als der Außendurchmesser des Stutzens 25 des Applikators 11, so daß dieser in das Loch 28 eingeführt werden kann. Die Dicke der Dichtungsscheibe 12 ist vorzugsweise größer als 1 mm und geringfügig größer bemessen als die Länge des Stutzens 25 des Applikators 11. Dadurch wird sichergestellt, daß beim Einführen des Stutzens 25 in das Loch 28 das untere Ende des Stutzens in geringem Abstand von der Oberfläche der in Fig. 1 bei 29 angedeuteten Windschutzscheibe gehalten wird.

In Fig. 1 ist in der Windschutzscheibe 29 bei 30 ein Steinschlagschaden angedeutet, der den typischen, von der Außenfläche zu der zwischen den beiden Verbundglasscheiben befindlichen Folie 31 sich erweiternden kegelförmig Rißaufbau hat. Zum Ausbessern dieses Schadens wird von der Dichtungsscheibe 12, die zum Schutz ihrer beiden Klebeschichten auf beiden Seiten mit jeweils einer (nicht gezeigten) Schutzfolie versehen ist, eine dieser Schutzfolien abgezogen. Sodann wird die Dichtungsscheibe 12 so auf die Außenfläche der Windschutzscheibe 29 aufgeklebt, daß das Zentrum der Schadstelle 30 in den Bereich des Lochs 28 zu liegen kommt. Daraufhin wird die zweite Schutzfolie abgezogen und der Applikator 11 mit seinem Stutzen 25 in das Loch 28 der Dichtungsscheibe 12 eingeführt und mit seiner Scheibe 24 in einer derartigen Ausrichtung auf die Dichtungsscheibe 12 aufgeklebt, daß der Ansatz 26 im wesentlichen senkrecht nach oben weist. Bei beiden Klebevorgängen ist nur geringfügiger Druck erforderlich, so daß auf die Schadstelle 30 keine weiteren Belastungen ausgeübt werden.

Die Injektionsspritze 10 wird vom Hersteller mit einer vorgegebenen Menge an (nicht gezeigtem) dünnflüssigem, lichthärtendem Kunstharz geliefert, das sich in dem Raum zwischen dem Kolben 17 und der Ausbringöffnung 14 befindet. Die Kolbenstange ist dabei bis zum Anschlag der Manschette 20 am Flansch 16 des Gehäuses 13 eingeschoben. Die Ausbringöffnung 14 ist beispielsweise mit einer Kappe oder einem Stopfen verschlossen.

Die Ausbringöffnung 14 wird nun geöffnet und die Ausbringtülle 15 so in den Ansatz 26 des Applikators 11 eingeführt, daß sich zwischen den beiden Bauteilen ein luftdichter Abschluß ergibt. Durch die Anwesenheit des flüssigen Kunstharzes wird dieser luftdichte Abschluß verbessert.

Durch Erfassen der Flansche 16 und 18 wird nun der Kolben 17 langsam zurückgezogen, wodurch in dem Innenraum des Gehäuses 13, der über die Ausbringtülle 15 und die Durchführung 27 in dem Applikator 11 mit den in der Schadstelle 30 vorhandenen Rissen kommuniziert, gegenüber der Umwelt jedoch abgedichtet ist, ein Unterdruck entsteht. Infolge dieses Unterdrucks werden in die Schadstelle 30 eingedrungene Luft und Feuchtigkeit entfernt. Die entweichende Luft durchsetzt dabei die bereits in die Durchführung 27 eingeflossene Menge des Kunstharzes. In dieser Phase des Verfahrens wird ein Vorwärtsschieben des Kolbens 17, das dazu führen würde, daß bereits Kunstharz in die Schadstelle gelangt, bevor die Luft und Feuchtigkeit daraus genügend abgesaugt worden sind, durch die an der Kolbenstange 19 angreifende Schneide 22 der Raste 21 verhindert. Die gleiche Schneide 22 ergibt vorteilhafterweise auch eine Bremswirkung beim Zurückziehen des Kolbens 17, wodurch sichergestellt wird, daß die in der Schadstelle vorhandene Luft abgesaugt wird.

Beim weiteren Zurückziehen der Kolbenstange 19 gerät der Kolben 17 in eine Stellung, in der er sich oberhalb des Loches 23 befindet, so daß durch dieses nun Luft in den unteren Bereich des Gehäuses 13 einströmen kann. Der nun einwirkende äußere Luftdruck befördert das Kunstharz auf die Schadstelle 30, wobei sowohl dieser Druck als auch die in den feinen Rissen wirkenden Kapillarkräfte das Eindringen unterstützen. Das Einfließen des Kunstharzes in die Schadstelle läßt sich von der Innenseite der Windschutzscheibe her beobachten.

Nach einer Wartezeit von etwa 10 min wird die Vorrichtung durch Abziehen der Dichtungsscheibe 12 von der Windschutzscheibe 29 entfernt. Auf die Schadstelle kann nun eine durchsichtige Folie aufgelegt werden, um für einen Luftabschluß zu sorgen, bis das Kunstharz durch das einfallende Tageslicht oder auch mit Hilfe von Kunstlicht auspolymerisiert ist.

Die in Fig. 2 dargestelle Variante unterscheidet sich von dem Ausführungsbeispiel nach Fig. 1 dadurch, daß am unteren Ende des Gehäuses 13 der Injektionsspritze 10 eine mit einem Innengewinde 32 versehene Manschette 33 angeformt ist, die die (in Fig. 2 nicht sichtbare) Ausbringtülle 15 umgibt. Das Innengewinde 32 dient zum Aufschrauben des Gehäuses 13 auf ein (ebenfalls nicht gezeigtes) Außengewinde, das am oberen Ende des Ansatzes 26 des Applikators 11 vorgesehen ist. In diesem Fall wird die dichte Verbindung zwischen Gehäuse 13 und Applikator 11 durch die ineinandergreifenden Gewinde unterstützt. Das Gewinde 32 dient auch zum Einschrauben einer die Ausbringöffnung 14 während Transport und Lagerung verschließenden (nicht dargestellten) Kappe.

Um ein vorzeitiges Polymerisieren des Kunstharzes zu vermeiden, bestehen das Gehäuse 13 der Injektionsspritze 10, der Applikator 11 und die Dichtungsscheibe 12 aus lichtundurchlässigen Materialien.

## Patentansprüche

1. Vorrichtung zum Ausbessern von Steinschlagschäden an Windschutzscheiben mittels eines flüssigen, klar aushärtenden Kunstharzes, umfassend

eine aus einem zylindrischen Gehäuse (13) mit einem seine Wand durchsetzenden Belüftungsloch (23) und einem in dem Gehäuse (13) verschiebbaren Kolben (17) zusammengesetzte Injektionsspritze (10) und

eine Dichtungseinrichtung (11, 12), die die Ausbringöffnung (14) der Injektionsspritze (10) und die Schadstelle (30) gegenüber der Umgebung abdichtet,

dadurch gekennzeichnet, daß das Belüftungsloch (23) in der Gehäusewand im Bereich des von der Ausbringöffnung (14) entfernten Endes des Gehäuses (13) ausgebildet und durch Zurückziehen des Kolbens (17) mit der vor dem Kolben gelegenen Kammer in Verbindung zu bringen ist.

2. Vorrichtung nach Anspruch 1, gekennzeichnet durch eine ein Vorschieben des Kolbens (17) hemmende Einrichtung (21).

3. Vorrichtung nach Anspruch 2, dadurch gekennzeichnet, daß die Hemmeinrichtung (21) eine an der Kolbenstange (19) angreifende, in Rückziehrichtung weisende Schneide (22) aufweist.

4. Vorrichtung nach Anspruch 2 oder 3, dadurch gekennzeichnet, daß die Hemmeinrichtung (21) auf einen Flansch (16) am hinteren Gehäuseende aufsteckbar ist.

5. Vorrichtung nach einem der Ansprüche 1 bis 4, dadurch gekennzeichnet, daß das Kunstharz in einen zwischen der zunächst verschlossenen Ausbringöffnung (14) und dem Kolben (17) in dessen vorderster Stellung vorhandenen Raum des Gehäuses (13) eingefüllt ist.

6. Vorrichtung nach einem der Ansprüche 1 bis 5, dadurch gekennzeichnet, daß die Dichtungseinrichtung eine auf die Windschutzscheibe (29) aufklebbare elastische Dichtungsscheibe (12) mit einem der Größe der Schadstelle (30) entsprechenden mittleren Loch (28) und eine auf die Dichtungsscheibe (12) aufklebbare Scheibe (24) mit einem in das Loch (28) eingreifenden Stutzen (25) und einem nach außen ragenden Ansatz (26) zum Einführen der Ausbringöffnung (14) der Injektionsspritze (10) umfaßt.

7. Vorrichtung nach Anspruch 6, dadurch gekennzeichnet, daß die Dichtungsscheibe (12) aus lichtundurchlässigem Material besteht, eine Dicke von mindestens 1 mm und einen im Vergleich zur Ausdehnung der Schadstelle (30) wesentlich größeren Außendurchmesser hat.

8. Vorrichtung nach Anspruch 6 oder 7, dadurch gekennzeichnet, daß die Ausbringöffnung (14) der Injektionsspritze (10) mit dem Ansatz (26) luftdicht verschraubbar ist.

9. Vorrichtung nach Anspruch 8, dadurch gekennzeichnet, daß die Ausbringöffnung (14) in einer Tülle (15) endet, die von einer mit einem Innengewinde (32) versehenen Manschette (33) umgeben ist.

10. Vorrichtung nach Anspruch 8 oder 9, dadurch gekennzeichnet, daß das im Bereich der Ausbringöffnung (14) vorgesehene Gewinde (32) zum Aufschrauben einer Verschlußkappe dient.

## Claims

1. A device for repairing damaged portions in windshields caused by stones by means of a liquid clear-curing synthetic resin, comprising

a syringe (10) composed of a cylindrical casing (13) with a vent hole (23) penetrating its wall, and a plunger (17) movable withing the casing (13), and

sealing means (11, 12) for sealing the discharge opening (14) of the syringe (10) and the damaged portion (30) relative to the ambient atmosphere,

characterised in that the vent hole (23) is formed in the casing wall in the area of the end of the casing (13) remote from the discharge opening (14) and is adapted to communicate with the chamber in front of the plunger (17) by retracting the plunger.

2. The device of claim 1, characterised by means (21) for inhibiting advancement of the plunger (17).

3. The device of claim 2, characterised in that the inhibiting means (21) includes a knife edge (22) engaging the piston rod (19) and facing in the direction of retraction.

4. The device of claim 2 or 3,characterised in that the inhibiting means (21) is adapted to be fitted onto a flange (16) provided at the rear casing end.

5. The device of any of claims 1 to 4, characterised in that the synthetic resin is filled in a space of the casing (13) which exists between the initially closed discharge opening (14) and the plunger (17) in its foremost position.

6. The device of any of claims 1 to 5, characterised in that the sealing means comprises an elastic sealing disk (12) adapted to be pasted onto the windshield (29) and having a central hole (28) corresponding to the size of the damaged portion (30), and a disk (24) adapted to be pasted onto the sealing disk (12) and having a connection piece (25) engaging in the hole (28) and an outwardly extending projection (26) for receiving the discharge opening (14) of the syringe (10).

7. The device of claim 6, characterised in that the sealing disk (12) is made of an opaque material with a thickness of at least 1 mm and an outer diameter which is substantially larger than that of the damaged portion (30).

8. The device of claim 6 or 7, characterised in that the discharge opening (14) of the syringe (10) is adapted for threadable connection to the projection (26) in an air-tight manner.

9. The device of claim 8, characterised in that the discharge opening (14) terminates in a nozzle (15) which is surrounded by sleeve (33) provided with an internal thread (32).

10. The device of claim 8 or 9, characterised in that the thread (32) is provided in the area of the discharge opening (14) and serves to receive a closure cap screwed onto it.

## Revendications

1. Dispositif pour réparer des pare-brises abîmés par des impacts de pierres au moyen d'une résine synthétique liquide qui reste transparente après le durcissement, comprenant

une seringue d'injection (10) assemblée à partir d'un boîtier cylindrique (13) avec un trou d'aération (23) traversant sa paroi et d'un piston (17) déplaçable à l'intérieur du boîtier (13), et

un dispositif d'étanchéité (11, 12) qui assure l'étanchéité de l'orifice de distribution (14) de la seringue d'injection (10) et de l'endroit endommagé (30) par rapport à la zone environnante,

caractérisé en ce que le trou d'aération (23) dans la paroi du boîtier est réalisé dans la région de l'extrémité du boîtier (13) éloignée de l'orifice de distribution (14) et peut être mis en communication avec la chambre située en avant du piston (17) par le retrait de celui-ci.

2. Dispositif selon la revendication 1, caractérisé en ce qu'il comprend un dispositif (21) qui empêche un avancement du piston (17).

3. Dispositif selon la revendication 2, caractérisé en ce que le dispositif de blocage (21) comporte une lame (22) appliquée contre la tige de piston (19) et orientée dans la direction de retrait.

4. Dispositif selon l'une des revendications 2 ou 3, caractérisé en ce que le dispositif de blocage (21) peut être emboîté sur une bride (16) à l'extrémité postérieure du boîtier.

5. Dispositif selon l'une des revendications 1 à 4, caractérisé en ce que la résine synthétique est introduite dans un espace du boîtier (13) situé entre l'orifice de distribution (14) tout d'abord fermé et le piston (17) dans la position la plus avancée de celui-ci.

6. Dispositif selon l'une des revendications 1 à 5, caractérisé en ce que le dispositif d'étanchéité comprend un disque d'étanchéité (12) élastique pouvant être collé sur le pare-brise (29) et présentant un trou central (28) qui correspond à la dimension de l'endroit endommagé (30), et un disque (24) pouvant être collé sur le disque d'étanchéité (12) et muni d'une tubulure (25) s'engageant dans le trou (28) et d'un embout (26) pour l'introduction de l'orifice de distribution (14) de la seringue d'injection (10).

7. Dispositif selon la revendication 6, caractérisé en ce que le disque d'étanchéité (12) est réalisé dans un matériau opaque et qu'il présente une épaisseur d'au moins 1 mm et un diamètre extérieur beaucoup plus grand que l'extension de l'endroit endommagé (30).

8. Dispositif selon l'une des revendications 6 ou 7, caractérisé en ce que l'orifice de distribution (14) de la seringue d'injection (10) peut être vissé de manière étanche à l'air sur l'embout (26).

9. Dispositif selon la revendication 8, caractérisé en ce que l'orifice de distribution (14) se termine par une douille (15) qui est enveloppée par une manchette (33) munie d'un filetage intérieur (32).

10. Dispositif selon l'une des revendications 8 ou 9, caractérisé en ce que le filetage (32) prévu dans la région de l'orifice de distribution (14) sert au vissage d'un capuchon de fermeture.

FIG. 1

FIG. 2

FIG. 3